# FASCICULE DE BREVET EUROPEEN

(11) **EP 1 529 972 B1**
(45) Date de publication et mention de la délivrance du brevet: **16.04.2008**
(21) Numéro de dépôt: 04356177.8
(22) Date de dépôt: 05.11.2004
(51) Int. Cl.: F16C 11/06

(54) **Procédé de fabrication d'un organe formant au moins une rotule et organe ainsi réalisé**
Herstellungsverfahren eines Bauteils das ein Kugelgelenk bildet und damit hergestelltes Bauteil
Method of manufacturing a member forming at least a balll joint and member produced thereby

(30) Priorité: 06.11.2003 FR 0313048
(43) Date de publication de la demande: 11.05.2005
(73) Titulaire: SKF Aerospace France, 26240 Saint Vallier (FR)
(72) Inventeur: Maheo, Yves, 26140 Anneyron (FR)
(74) Mandataire: Myon, Gérard Jean-Pierre

(56) Documents cités:
- FR-A- 1 429 483
- FR-A- 2 769 866
- FR-A- 2 770 597
- GB-A- 1 295 258
- US-A- 3 082 485
- US-A- 3 700 295
- US-A- 4 111 499
- US-A- 5 407 288

## Description

La présente invention concerne un procédé de fabrication d'un organe formant au moins une rotule, ainsi qu'un organe formant au moins une rotule obtenu par un tel procédé.

Les rotules sont en particulier utilisées dans l'industrie aéronautique afin d'immobiliser en translation un organe, telle qu'une bielle, par rapport à une pièce de structure de la construction, tout en permettant un mouvement relatif en rotation.

De manière connue, une telle rotule comprend une noix intérieure, dont la surface intérieure est adaptée pour être montée sur un arbre. A cet effet, cette surface intérieure peut être pourvue de gorges coopérant avec des cannelures réalisées sur la surface extérieure de l'arbre, de manière à garantir une meilleure liaison mutuelle.

La noix intérieure possède une surface extérieure sphérique tronquée, apte à coopérer avec la surface intérieure correspondante d'une coquille extérieure. La noix intérieure et la coquille extérieure possèdent donc trois degrés de liberté mutuelle en rotation, alors qu'elles sont assujetties l'une à l'autre en translation.

On connaît différents procédés de réalisation de telles rotules.

Un premier procédé consiste à réaliser tout d'abord une noix intérieure métallique selon ses dimensions définitives, puis à rapporter autour de la périphérie externe un manchon métallique qui est embouti contre la surface extérieure de la noix. Le manchon est alors usiné au niveau de sa périphérie extérieure, de manière à constituer la coquille extérieure définitive.

Cependant, la forme et la taille de la coquille extérieure obtenues par ce procédé sont limitées par la dimension de la presse d'emboutissage utilisée.

Une seconde solution consiste à réaliser la noix intérieure métallique en deux éléments en forme de C. Ce mode de fabrication est connu du brevet français 2 770 597, au nom de la Demanderesse. Selon ce procédé, on réalise une ébauche métallique d'un seul tenant, possédant des surfaces extérieure et intérieure sensiblement identiques aux surfaces définitives de la noix, puis on effectue une découpe de cette ébauche de manière à réaliser les deux éléments précités en forme de U.

Il est par ailleurs connu de FR-A-1 429 483, US-A-3,082,485, US-A-5,407,288, US-A-3,700,295, GB-A-1 295 258 et US-A-4,111,499 d'interposer une garniture composite entre la noix intérieure métallique et la coquille extérieure métallique d'une rotule. La mise en place d'une telle garniture est une opération complexe, qui augmente le nombre d'étapes de fabrication de la rotule et son prix de revient. En outre, comme décrit ci-dessus, la coquille extérieure métallique de cette rotule doit de toute façon être rapportée par emboutissage, par assemblage de deux parties élémentaires ou par des techniques analogues.

Ceci étant posé, le but de l'invention est de proposer un procédé de fabrication alternatif aux procédés évoqués ci-dessus, qui permettent d'obtenir de façon simple un organe formant au moins une rotule, parfois dénommé « ensemble rotulant », mécaniquement satisfaisant et d'une masse moindre.

A cet effet, l'invention a pour objet un procédé de fabrication d'un organe formant au moins une rotule, tel que défini à la revendication 1.

Selon le procédé de l'invention, en utilisant la ou chaque noix intérieure comme contre-pièce de moulage de la coquille extérieure, on obtient ainsi une ou des rotules indémontables et dont le rapport masse/performance est optimisé. Dans la mesure où la coquille extérieure est obtenue par moulage d'un corps rapporté sur la ou les noix intérieures, la forme et les dimensions de la coquille extérieure ne sont plus limitées par des contraintes d'emboutissage ou d'usinage. Il est en particulier possible de réaliser la coquille extérieure sous forme d'une ferrure monobloc et de grandes dimensions, dans laquelle sont logées une ou plusieurs noix de façon à obtenir autant de rotule(s) que de noix. De plus, les opérations mises en oeuvre durant ce procédé de fabrication sont moins nombreuses et plus simples à réaliser, notamment car elles ne nécessitent pas un agencement dimensionnel préalable très strict entre la ou les noix intérieures et la coquille obtenue par moulage. Enfin, la forme de la surface d'articulation ménagée sur le corps rapporté est toujours adaptée à celle de la surface d'articulation de la ou chaque noix intérieure, indépendamment des tolérances de fabrication de cette noix.

D'autres caractéristiques de ce procédé, prises isolément ou selon toutes les combinaisons techniquement possibles, sont énoncés aux revendications dépendantes 2 à 9.

L'invention a également pour objet un organe formant au moins une rotule ou « ensemble rotulant », notamment obtenu par un procédé décrit ci-dessus, tel que défini à la revendication 10.

Des caractéristiques avantageuses de cet organe sont énoncées aux revendications 11 et 12.

L'invention sera bien comprise à la lecture de la description qui va suivre, donnée uniquement à titre d'exemple et faite en se référant aux dessins, sur lesquels :
- la figure 1 est une vue en perspective d'un organe formant une rotule, selon l'invention ;
- la figure 2 est une coupe longitudinale partielle de l'organe de la figure 1 ;
- les figures 3 et 4 sont des vues en perspective partiellement tronquées, illustrant deux étapes successives du procédé de fabrication, selon l'invention, de l'organe de la figure 1 ;
- la figure 5 est une vue en perspective d'un organe formant deux rotules selon l'invention ; et
- la figure 6 est une vue en plan illustrant une étape du procédé de fabrication de l'organe de la figure 5.

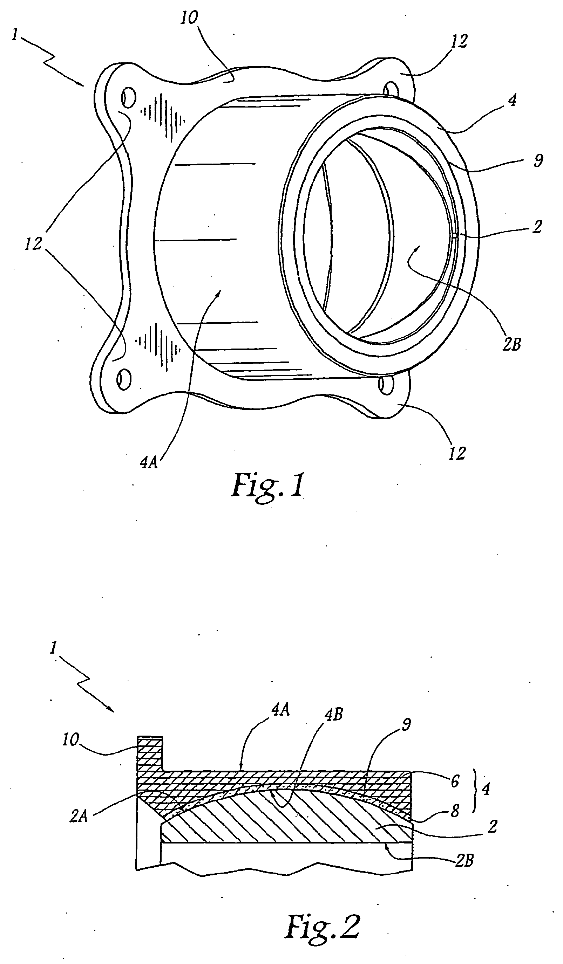

Sur les figures 1 et 2 est représenté un organe 1 formant une rotule, appelé par la suite « la rotule 1 ». La rotule 1 est constituée d'une noix intérieure 2 et d'une coquille extérieure 4.

La noix intérieure 2 est une pièce métallique d'un seul tenant. Cette noix présente une surface extérieure 2A dont le profil sphérique tronquée correspond à celui de la surface intérieure 4B de la coquille extérieure 4, de sorte que la noix intérieure et la coquille extérieure possèdent, l'une par rapport à l'autre, trois degrés de liberté en rotation.

Les dimensions et les courbures respectives des surfaces 2A et 4B sont telles que la noix intérieure 2 est indémontable de la coquille extérieure 4, c'est-à-dire que la noix ne peut pas être extraite de la coquille sans provoquer la détérioration irrémédiable de la rotule 1.

La noix intérieure 2 présente également une surface intérieure 2B sensiblement cylindrique adaptée pour être montée sur un organe tubulaire, tel qu'une bielle.

La coquille extérieure 4 est réalisée en un matériau composite incluant une matrice en matière plastique thermodurcissable ou thermoplastique, telle qu'une résine époxyde, polyamide ou phénolique. A titre d'exemple, environ 60% en volume du composite sont constitués de fibres. Dans la partie extérieure 6 de la coquille, cette matrice est renforcée de fibres de carbone, notamment des fibres dites longues, c'est-à-dire dont la longueur moyenne est supérieure à l'épaisseur de la coquille 4. La longueur moyenne des fibres est par exemple comprise entre quelques millimètres et plusieurs mètres.

Dans la partie intérieure 8 de la coquille 4, qui forme la surface 4B et sur laquelle la noix intérieure 2 est, en fonctionnement, destinée à s'appuyer et à rotuler, la matrice plastique est mêlée à une garniture fibreuse auto-lubrifiante 9, c'est-à-dire permettant le contact glissant avec la surface extérieure 2A de la noix 2 sans apport de lubrifiant.

Cette garniture auto-lubrifiante comprend notamment des fibres anti-friction réalisées en polytétrafluoroéthylène (PTFE), ainsi que des fibres plus rigides à même de résister aux pressions de contact exercées en fonctionnement entre la noix et la coquille, par exemple, des fibres en carbone, aramide et/ou verre.

La coquille extérieure 4 présente une surface extérieure 4A sensiblement cylindrique. Une bride 10 s'étend en saillie depuis une extrémité de cette surface 4A. La bride 10 est venue de matière avec la partie extérieure 6 de la coquille et est adaptée pour permettre la fixation de la coquille à une pièce de structure non représentée. A cet effet, la bride 10 est pourvue d'oreilles d'attache 12.

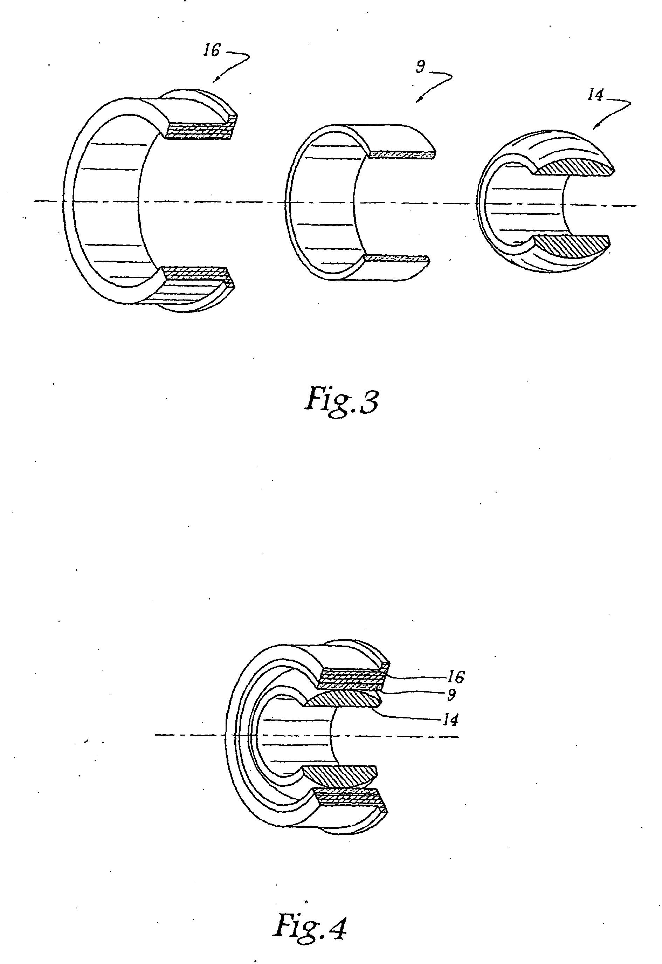

Un procédé de fabrication permettant d'obtenir la rotule 1 va maintenant être décrit en regard des figures 3 et 4.

Dans un premier temps, on dispose d'une bague métallique 14 destinée à former la noix intérieure métallique 2. Avantageusement, la géométrie et les dimensions de la bague 14 sont exactement celles de la noix 2. Cette bague est obtenue par tout procédé connu, par exemple par usinage éventuellement suivi d'un rectifiage et d'un traitement de surface.

On dispose également d'une pré-forme 16 de la coquille extérieure 4, c'est-à-dire d'un squelette fibreux dont la forme correspond sensiblement à celle de la coquille 4 à obtenir ultérieurement par moulage comme expliqué ci-dessous.

Comme représenté sur la figure 3, on dispose en outre de la garniture fibreuse auto-lubrifiante 9, qui se présente, avant toute opération de fabrication de la rotule, sous la forme d'une bague essentiellement cylindrique dont les dimensions internes sont légèrement supérieures aux dimensions extérieures maximales de la bague 14.

Comme représenté sur la figure 4, on met en place la garniture 9 autour de la bague 14, de façon à rendre ces dernières sensiblement co-axiales. On dispose alors autour de la bague 14 et de la garniture 9 la pré-forme fibreuse 16.

L'ensemble ainsi formé est placé dans un moule étanche, par exemple du type décrit dans le brevet FR-B-2 769 866 dans lequel de la résine en matière synthétique est injectée dans la pré-forme de façon à mouler la coquille extérieure 4 en matériau composite. L'injection est prévue pour que la résine se mêle à la fois à la préforme fibreuse 16 et à la garniture fibreuse auto-lubrifiante 9 de façon à ce que cette garniture forme, une fois le moulage terminé, une structure composite constituant une partie intégrante de la coquille 4. Durant toute cette étape d'obtention du corps composite, la bague 14, c'est-à-dire la noix intérieure 2, forme ainsi une contre-pièce de moulage de la coquille extérieure 4.

Avantageusement, dans le même moule, la résine est injectée de manière à former également la bride 10.

La noix intérieure 2 de la rotule 1 ainsi obtenue est indémontable, la coquille extérieure en matériau composite 4 étant rapportée directement sur cette noix en l'emprisonnant.

La rotule obtenue présente également l'avantage d'intégrer dans la matière de la coquille extérieure 4 la garniture auto-lubrifiante, évitant de recourir à des matériaux de collage généralement fragilisés lors de chocs ou par la propagation de vibrations thermiques ou sonores. La matrice synthétique de la coquille extérieure 4 étant mêlée à la fibre de cette garniture, les problèmes liés aux dilatations différentielles entre la partie extérieure 6 et la partie intérieure 8 de la coquille sont nettement amoindris.

De la même façon, la bride 10 est d'un seul tenant avec le reste de la coquille 4, sans discontinuité des fibres.

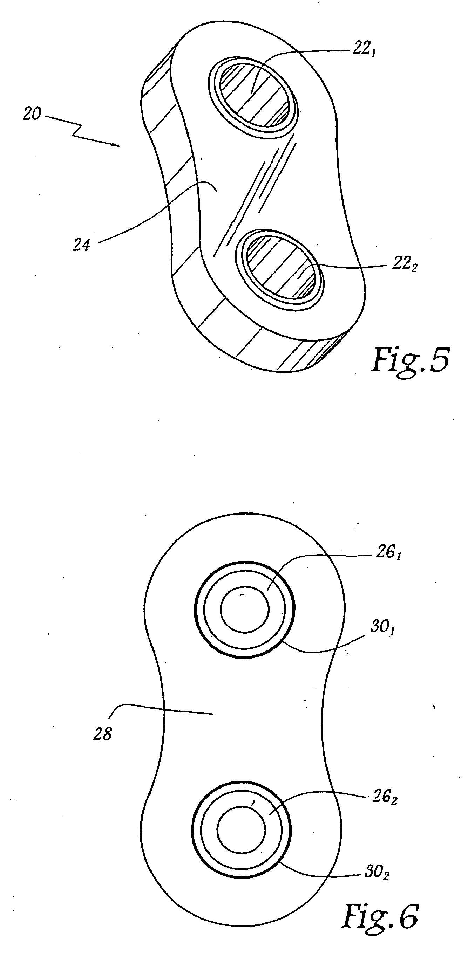

Sur la figure 5 est représenté un organe 20 formant deux rotules, variante selon l'invention de la rotule 1 des figures 1 et 2. Cet organe 20 ou « ensemble rotulant » comporte deux noix intérieures 22₁ et 22₂ métalliques, sensiblement analogues à la noix 2 de la rotule 1 et une unique coquille extérieure 24 composite, sensiblement analogue à la coquille 4. Les surfaces de contact sphériques tronquées respectives de chaque noix 22₁, 22₂ et de chaque partie environnante de la coquille 24 coopèrent de façon à former deux rotules dont les noix sont indémontables vis-à-vis de la coquille.

L'organe 20 se distingue ainsi essentiellement de la rotule 1 par la forme de sa coquille extérieure 24 qui est notamment adaptée à son environnement d'utilisation ultérieure. A titre d'exemple, cet organe constitue une attache d'un accessoire à deux axes, dans le domaine aéronautique.

Pour obtenir cet organe, on met en oeuvre une variante du procédé décrit plus haut, suivant laquelle, comme représenté sur la figure 6, on dispose de deux bagues métalliques 26₁ et 26₂ destinées à former respectivement les noix 22₁ et 22₂, ainsi que d'une unique pré-forme fibreuse 28 de nature analogue à la pré-forme 16. La pré-forme 28 est découpée de façon à ce que sa géométrie extérieure corresponde sensiblement à celle de la coquille 24 à obtenir et à ce qu'elle puisse être rapportée autour des bagues 26₁ et 26₂. A cet effet, un patron de découpe correspondant peut être utilisé. Une garniture fibreuse auto-lubrifiante 30₁, 30₂ est interposée entre chaque bague et la pré-forme. Avantageusement, ces garnitures 30₁ et 30₂ sont tissées avec les zones correspondantes de la pré-forme, avant que cette dernière soit rapportée autour des bagues.

De la résine est ensuite injectée dans la pré-forme de manière à la fois à obtenir la structure composite de la coquille 24 et à pénétrer les garnitures auto-lubrifiantes 30₁, 30₂ pour les lier fermement à la coquille. Les bagues 22₁ et 22₂ forment ainsi des contre-pièces de moulage de la coquille 24.

Divers aménagements et variantes aux organes formant au moins une rotule et aux procédés décrits ci-dessus sont en outre envisageables. A titre d'exemple :
- la pré-forme fibreuse utilisée pour former la partie extérieure de la coquille 4 ou 24 comprend, outre des fibres de carbone, des fibres de verre et/ou d'aramide ;
- la pré-forme fibreuse 16 ou 28 comporte des fibres de carbone pré-imprégnées de résine, de sorte que, lorsque la structure pré-forme/garniture(s) auto-lubrifiante(s)/noix intérieure(s) est placée dans le moule d'injection et de traitement thermo-mécanique, une quantité moindre de résine, voire aucune résine supplémentaire est injectée pour former la matrice du matériau composite de la coquille 4 ou 24 ; et/ou
- la surface intérieure de la ou chaque garniture fibreuse auto-lubrifiante 9 ou 30₁, 30₂ est, avant le moulage de la coquille, recouverte d'un agent de démoulage destiné à empêcher toute adhésion entre le corps composite rapporté obtenu lors du moulage et la surface extérieure de la noix correspondante ; et/ou
- la surface extérieure de la ou chaque noix métallique 2 ou 22₁, 22₂ est recouverte d'un fin dépôt anti-frottement, tel qu'un dépôt PVD (dépôt de vapeurs en atmosphère plasma), DLC (dépôt de carbone sous forme de diamant amorphe, dit « diamond like carbon ») ou HVOF (dépôt dit « hight velocity oxy-fuel »).

## Revendications

1. Procédé de fabrication d'un organe formant au moins une rotule, dans lequel on dispose d'au moins une bague métallique (14 ; 26₁, 26₂) destinée à former une noix intérieure (2 ; 22₁, 22₂) pour la ou chaque rotule de l'organe (1; 20), **caractérisé en ce qu'**on utilise la ou les bague(s) métallique(s) (14 ; 26₁, 26₂) comme contre-pièce(s) de moulage d'un corps rapporté monobloc à structure composite, destiné à constituer une coquille extérieure (4 ; 24) pour la ou les rotules de l'organe (1 ; 20), et **en ce que** lors du moulage du corps rapporté, on forme en périphérie extérieure de celui-ci une bride d'attache (10) de la coquille (4).

2. Procédé suivant la revendication 1, **caractérisé en ce que**, pour obtenir le corps rapporté, on met en place sur la face extérieure (2A) de la ou des bague(s) métallique(s) (14 ; 26₁, 26₂) une pré-forme fibreuse (16 ; 28), puis on traite ladite pré-forme de manière à former une structure composite comprenant une matrice en matière synthétique renforcée par les fibres de la pré-forme.

3. Procédé suivant la revendication 2, **caractérisé en ce que**, lors du traitement de la pré-forme fibreuse (16 ; 28), on injecte dans celle-ci de la résine synthétique pour former la matrice.

4. Procédé suivant l'une des revendications 2 ou 3, **caractérisé en ce que** les fibres de la pré-forme sont pré-imprégnées d'une substance synthétique qui, lors du traitement de la pré-forme, forme au moins en partie la matrice.

5. Procédé suivant l'une quelconque des revendications 2 à 4, **caractérisé en ce que** les fibres de la pré-forme (16 ; 28) comportent des fibres de carbone, notamment des fibres de longueur moyenne supérieure à l'épaisseur finale de la coquille extérieure (4 ; 24).

6. Procédé suivant l'une quelconque des revendications 2 à 5, **caractérisé en ce que**, avant de traiter la pré-forme (16 ; 28), on interpose, entre la pré-forme et la ou chaque bague métallique (14 ; 26₁, 26₂), une garniture auto-lubrifiante (9 ; 30₁, 30₂) adaptée pour, lors du traitement de la pré-forme, se solidariser à la structure composite et former ainsi une partie intégrante du corps rapporté.

7. Procédé suivant la revendication 6, **caractérisé en ce que** la garniture auto-lubrifiante (9 ; 30₁, 30₂) est de nature fibreuse et éventuellement tissée avec la pré-forme (16 ; 28).

8. Procédé suivant la revendication 7, **caractérisé en ce que** la garniture auto-lubrifiante (9 ; 30₁, 30₂) contient des fibres anti-friction, telles que du polytétrafluoréthylène, et/ou des fibres résistantes aux pressions de contact destinées à être exercées entre la ou chaque noix intérieure (2 ; 22₁, 22₂) et la coquille extérieure (4 ; 24) de l'organe (1 ; 20) en fonctionnement.

9. Procédé suivant l'une quelconque des revendications précédentes, **caractérisé en ce que**, lors du moulage du corps rapporté, on réalise la coquille extérieure (4 ;24) sous forme d'une ferrure monobloc à structure composite.

10. Organe formant au moins une rotule, comprenant une coquille extérieure (4 ; 24) et au moins une noix intérieure (2, 22₁, 22₂), coopérant par des surfaces de contact sphériques tronquées (2A, 4B) respectives, **caractérisé en ce que** un corps rapporté, qui forme la coquille extérieure pour la ou les rotules de l'organe (1 ; 20), est formé pendant son moulage, en périphérie extérieure de celui-ci, avec une bride d'attache (10) de la coquille (4) et est constituée d'un corps monobloc réalisé en un matériau composite comprenant une matrice en matière synthétique et des fibres, la ou chaque noix intérieure (2 ; 22₁, 22₂) étant réalisée d'une seule pièce indémontable, notamment métallique.

11. Organe suivant la revendication 10, **caractérisé en ce que** dans la ou les parties (8) de la coquille extérieure (4 ; 24) qui sont périphériques à la ou aux noix intérieures (2 ; 22₁, 22₂), les fibres du matériau composite sont auto-lubrifiantes.

12. Organe suivant l'une des revendications 10 ou 11, **caractérisé en ce que** la coquille extérieure (4 ; 24) est adaptée pour être fixée à une pièce de structure.

## Claims

1. Process for manufacture of a unit forming at least one ball-joint, in which there is at least one metal ring (14; 26₁, 26₂) intended to form an internal head (2; 22₁, 22₂) for the or each ball-joint in the unit (1; 20), **characterised in that** the metal ring or rings (14; 26₁, 26₂) is used as a reverse mould or moulds for a monobloc insert body having a composite structure, intended to form an outer shell (4; 24) for the ball-joint(s) of the unit (1; 20) and **in that** when the insert body is moulded an attachment flange (10) for the shell (4) is formed at its outer periphery.

2. Process according to claim 1, **characterised in that**, to obtain the insert body, a fibrous pre-form (16; 28) is placed on the external face (2A) of the metal ring or rings (14; 26₁, 26₂), then said preform is treated in such a way as to form a composite structure consisting of a matrix of synthetic material reinforced by the fibres of the preform.

3. Process according to claim 2, **characterised in that**, when the fibrous preform (16; 28) is treated, synthetic resin is injected into it to form the matrix.

4. Process according to either of claims 2 or 3, **characterised in that** the fibres of the preform are preimpregnated with a synthetic substance which, when the preform is treated, at least partly forms the matrix.

5. Process according to any one of claims 2 to 4, **characterised in that** the fibres of the preform (16; 28) include carbon fibres, in particular fibres whose average length is greater than the final thickness of the outer shell (4; 24).

6. Process according to any one of claims 2 to 5, **characterised in that**, before treating the preform (16; 28), a self-lubricating lining (9; 30₁, 30₂) adapted so that, during treatment of the preform, it becomes joined to the composite structure and thus forms an integral part of the insert body, is placed between the preform and the or each metal ring (14; 26₁, 26₂).

7. Process according to claim 6, **characterised in that** the self-lubricating lining (9; 30₁, 30₂) is of a fibrous nature and may be woven with the preform (16; 28).

8. Process according to claim 7, **characterised in that** the self-lubricating lining (9; 30₁, 30₂) contains anti-friction fibres such as polytetrafluoroethylene fibres and/or fibres resistant to the contact pressures which will be exerted between the or each internal head (2; 22₁, 22₂) and the outer shell (4; 24) of the unit (1; 20) during operation.

9. Process according to any one of the preceding claims, **characterised in that** when the insert body is moulded, the outer shell (4; 24) is made in the form of a single-piece fitting with a composite structure.

10. Unit forming at least one ball-joint, including an outer shell (4; 24) and at least one internal head (2; 22₁, 22₂), co-operating via respective truncated spherical contact surfaces (2A, 4B), **characterised in that** an insert body which forms the outer shell for the ball joint or joints of the unit (1; 20) is formed during its moulding, at the outer periphery of the latter, with an attachment flange (10) for the shell (4) and consists of a single-piece body made of a composite material including a matrix of synthetic material and fibres, the or each internal head (2; 22₁, 22₂) being made of a single part which cannot be dismantled, in particular made of metal.

11. Unit according to claim 10, **characterised in that** in the part or parts (8) of the outer shell (4; 24) which are peripheral to the internal head or heads (2; 22₁, 22₂), the fibres of the composite material are self-lubricating.

12. Unit according to either one of claims 10 or 11, **characterised in that** the outer shell (4; 24) is adapted to be fixed to a structural element.

## Patentansprüche

1. Verfahren zur Herstellung eines mindestens ein Kugelgelenk bildenden Bauteils, in dem mindestens ein Metallring (14; 26₁, 26₂) angeordnet wird, der dazu dient, eine Innennuss (2; 22₁, 22₂) für das oder jedes Kugelgelenk des Bauteils (1; 20) zu bilden, **dadurch gekennzeichnet, dass** der (die) Metallring(e) (14, 26₁, 26₂) als Formgegenstück eines einstückig zusammengesetzten Körpers mit Verbundgefüge verwendet wird (werden), der vorgesehen ist, eine Außenschale (4; 24) für das oder die Kugelgelenke (1; 20) zu bilden, und dass beim Formen des zusammengesetzten Körpers an dem äußeren Umfang desselben ein Befestigungsflansch (10) der Schale (4) gebildet wird.

2. Verfahren nach Anspruch 1, **dadurch gekennzeichnet, dass**, um den zusammengesetzten Körper zu erhalten, auf der Außenfläche (2A) des oder der Metallringe(s) (14; 26₁, 26₂) eine Faservorform (16; 28) in Stellung gebracht wird, dann die Vorform in der Weise behandelt wird, dass ein Verbundgefüge gebildet wird, das eine Matrix aus durch die Fasern der Vorform verstärkten Kunststoff umfasst.

3. Verfahren nach Anspruch 2, **dadurch gekennzeichnet, dass** bei der Behandlung der Faservorform (16; 28) Kunstharz zur Bildung der Matrix eingespritzt wird.

4. Verfahren nach einem der Ansprüche 2 oder 3, **dadurch gekennzeichnet, dass** die Fasern der Vorform mit einer synthetischen Substanz imprägniert sind, die bei der Behandlung der Vorform mindestens teilweise die Matrix bildet.

5. Verfahren nach einem beliebigen der Ansprüche 2 bis 4, **dadurch gekennzeichnet, dass** die Fasern der Vorform (16; 28) Karbonfasern umfassen, insbesondere Fasern mit einer mittleren Länge, die größer ist als die Enddicke der Außenschale (4; 24).

6. Verfahren nach einem beliebigen der Ansprüche 2 bis 5, **dadurch gekennzeichnet, dass** vor der Behandlung der Vorform (16; 28) zwischen die Vorform und dem oder jedem Metallring (14; 26₁, 26₂) eine selbst schmierende Dichtung (9; 30₁, 30₂) zwischen gelegt ist, die angepasst ist, um sich bei der Behandlung der Vorform mit dem Verbundgefüge zu verbinden und so einen integralen Teil des zusammengesetzten Körpers zu bilden.

7. Verfahren nach Anspruch 6, **dadurch gekennzeichnet, dass** die selbst schmierende Dichtung (9; 30₁, 30₂) von faserartiger Beschaffenheit ist und gegebenenfalls mit der Vorform (16; 28) gewebt wird.

8. Verfahren nach Anspruch 7, **dadurch gekennzeichnet, dass** die selbst schmierende Dichtung (9; 30₁, 30₂) reibungsmindernde Fasern, wie aus Polytetrafluorethylen, und/oder Fasern, die widerstandsfähig gegen Kontaktdrücke sind, die vorgesehen sind, zwischen der oder jeder Innennuss (2; 22₁, 22₂) und der Außenschale (4; 24) des Bauteils (1; 20) im Betrieb ausgeübt zu werden, enthält.

9. Verfahren nach einem beliebigen der vorhergehenden Ansprüche, **dadurch gekennzeichnet, dass** bei dem Formen des zusammengesetzten Körpers die Außenschale (4; 24) in Form eines einstückigen Beschlages mit Verbundgefüge hergestellt wird.

10. Bauteil, das mindestens ein Kugelgelenk bildet, eine Außenschale (4; 24) und mindestens eine Innennuss (2; 22₁, 22₂) umfassend, die über jeweilige abgestumpfte Kugelkontaktflächen (2A, 4B) zusammenarbeiten, **dadurch gekennzeichnet, dass** ein zusammengesetzter Körper, der die Außenschale für das oder die Kugelgelenke des Bauteils (1; 20) bildet, bei seinem Formen an dem Außenumfang desselben mit einem Befestigungsflansch (10) der Schale (4) geformt wird, und aus einem einstückigen Körper gebildet wird, der aus einem Verbundmaterial hergestellt ist, das eine Matrix aus Kunststoff und Fasern umfasst, wobei die oder jede Innennuss (2; 22₁, 22₂) aus einem nicht auseinander nehmbaren Teil, insbesondere aus Metall hergestellt ist.

11. Bauteil nach Anspruch 10, **dadurch gekennzeichnet, dass** in dem oder den Teilen (8) der Außenschale (4; 24), die an der oder den Innennüssen (2; 22₁, 22₂) angrenzen, die Fasern des Verbundmaterials selbst schmierend sind.

12. Bauteil nach einem der Ansprüche 10 oder 11, **dadurch gekennzeichnet, dass** die Außenschale (4; 24) angepasst ist, an einem Strukturteil befestigt zu werden.
